# EUROPÄISCHE PATENTSCHRIFT

(11) **EP 2 163 079 B1**
(45) Veröffentlichungstag und Bekanntmachung des Hinweises auf die Patenterteilung: **10.08.2016**
(21) Anmeldenummer: 08773649.2
(22) Anmeldetag: 25.06.2008
(51) Int. Cl.: H04M 1/247, H04M 1/725, H04M 1/2745, H04M 3/493

(54) **BENUTZERSCHNITTSTELLE MIT GRAPHISCHER BENUTZEROBERFLÄCHE**
USER INTERFACE HAVING A GRAPHICAL USER INTERFACE
INTERFACE UTILISATEUR À SURFACE UTILISATEUR GRAPHIQUE

(30) Priorität: 26.06.2007 DE 102007029586
(43) Veröffentlichungstag der Anmeldung: 17.03.2010
(73) Patentinhaber: Vodafone Holding GmbH, 40213 Düsseldorf (DE)
(72) Erfinder: JEFFERY, Phil, 40477 Düsseldorf (DE)
(74) Vertreter: Ring & Weisbrodt
(86) Internationale Anmeldenummer: PCT/EP2008/005143
(87) Internationale Veröffentlichungsnummer: WO 2009/000516

(56) Entgegenhaltungen:
- EP-A- 1 091 547
- EP-A- 1 152 587
- EP-A- 1 624 660
- WO-A-98/18283
- US-A1- 2005 097 189
- US-A1- 2005 240 653
- US-A1- 2007 116 201

## Beschreibung

Die vorliegende Erfindung betrifft ein Verfahren zum Betreiben einer Benutzerschnittstelle mit graphischer Benutzeroberfläche seitens eines Rechners, welcher Mittel zum Zugriff auf ein Kommunikationsdienste anbietendes Kommunikationsnetz aufweist, mit den Merkmalen des Oberbegriffs des Anspruchs 1.

Ferner betrifft die vorliegende Erfindung eine Benutzerschnittstelle mit graphischer Benutzeroberfläche zur Nutzung wenigstens eines Kommunikationsdienstes eines Kommunikationsdienste anbietenden Kommunikationsnetzes, mit den Merkmalen des Oberbegriffs des Anspruchs 8.

Derartige Benutzerschnittstellen mit graphischer Benutzeroberfläche (GUI: Graphical User Interface) zur Nutzung wenigstens eines Kommunikationsdienstes eines Kommunikationsdienste anbietenden Kommunikationsnetzes als auch Verfahren zum Betreiben derselben sind im Stand der Technik für zahlreiche Anwendungen in verschiedenen Ausgestaltungen bekannt, insbesondere im Zusammenhang mit Menüführungen von in Mobilfunknetzen betreibbaren mobilen Endgeräten in Form von Mobilfunktelefonen oder im Zusammenhang mit dem Internet als Kommunikationsnetz in Form sogenannter Browser. Eine entsprechende Benutzerschnittstelle eines Browsers ist beispielsweise seitens der EP 0 843 269 B1 beschrieben. Als Kommunikationsdienste des Kommunikationsnetzes kommen dabei insbesondere Kommunikationsverbindungen des Kommunikationsnetzes zum Austausch von Sprache und/oder Daten als Kommunikationsdienste des Kommunikationsnetzes über die Kommunikationsverbindung mit dem Kommunikationsnetz in Frage.

EP 1 091 547 A2 offenbart ein Verfahren zum Betreiben einer webbasierten Steuerung für Telefonieendgeräte. Mittels eines Call-Servers, der eine Verbindung zu einem der Telefonieendgeräte aufweist, kann die Steuerung der Telefonieendgeräte erfolgen. Dazu wird eine Web-Application verwendet, die ebenfalls eine Verbindung zu dem Call-Server aufweist.

US 2005/00240653 A1 offenbart ein Verfahren, mit welchem ein direkter Zugriff auf Telefoniedienste aus Office-Programmen heraus ermöglicht wird. Dazu wird mittels eines Plug-Ins, welches den Office-Programmen hinzugefügt wird, eine Telefonnummer oder dergleichen identifiziert und mit Hilfe von Smart-Tags in Hyperlinks umgewandelt. Über den Hyperlink ist eine Kopplung mit einer Messaging-Software möglich, so dass über dieses Programm beispielsweise die Telefonnummer gewählt werden kann.

US 2005/0097189 A1 offenbart ein Verfahren, mit welchem bei Webbrowsern Telefonnummern in Hyperlinks umgewandelt werden können. Durch den Hyperlink können Aktionen, die Telefoniedienste umfassen, ausgeführt werden. Der Telefoniedienst wird über ein externes Programm realisiert, so dass beispielsweise beim Anklicken eines Hyperlinks eine Voice-Over-IP-Verbindung über ein externes Programm aufgebaut wird.

WO 98/18283 A1 offenbart ein Verfahren zum Betreiben einer Webeinrichtung, die eine Datenbank umfasst. In diese Datenbank werden beispielsweise Telefonkontaktlisten oder ähnliches abgespeichert. Die Webeinrichtung besitzt eine Verbindung zu einem Telefonswitch, welcher wiederum mit Telefonieendgeräten verbunden ist. Über einen Webbrowser ist es nun möglich, Telefoniedienste auszuführen. Diese umfassen zum Beispiel das Einleiten sowie Steuern von Anrufen.

EP 1 624 660 A2 offenbart ein IP-Telefoniesystem und -verfahren. Dazu kann ein Nutzer mit Hilfe eines Browsers über einen Webserver zum Beispiel Telefoniekontakte suchen. Die auf dem Server hinterlegten Daten ermöglichen einen Verbindungsaufbau zu dem Kontaktpartner. Dazu werden die dafür benötigten Daten an ein IP-Telefon übermittelt, so dass über dieses die Verbindung hergestellt werden kann.

EP 1 152 587 A1 offenbart ein Telefonieverfahren, das von Telefonnetzbetreibern eingesetzt wird. Dabei kann ein Nutzer mit seinem PC über seine Internetverbindung eine Telefonverbindung herstellen. Der PC ist dabei nicht nur mit IP-Telefonen verbindbar, sondern mit jedem öffentlichen Teilnehmer. Dazu wird seitens des Telefonnetzbetreibers ein Server benötigt, welcher die Verbindung zwischen VolP (PC) und dem öffentlichen Telefonnetz bereitstellt.

US 2007/00116201 A1 offenbart ein Telefonieverfahren, das eine sogenannte Call-Completion ermöglicht. Bei der Call-Completion handelt es sich um das automatische Weiterverbinden mit Teilnehmern, wie es beispielsweise von der Auskunft bekannt ist. Gemäß dem Verfahren kann ein Nutzer mit Hilfe diverser Eingabeparameter einen Teilnehmer ausfindig machen. Die Teilnehmerdetails werden mittels einer SMS an den Nutzer übermittelt. Die Telefonnummer des Teilnehmers wird aus der SMS extrahiert und an eine Vermittlungsstelle übermittelt, welche, falls vom Nutzer gewünscht, eine Verbindung zu dem Teilnehmer herstellt.

Die bisher bekannten Benutzerschnittstellen mit graphischer Benutzeroberfläche zur Nutzung wenigstens eines Kommunikationsdienstes eines Kommunikationsdienste anbietenden Kommunikationsnetzes sowie die bisher bekannten Verfahren zum Betrieb derartiger Benutzerschnittstellen sind hinsichtlich der dem Nutzer der Benutzerschnittstellen zur Verfügung stehenden Möglichkeiten einer Kontrolle und/oder Steuerung von Kommunikationsverbindungen über das Kommunikationsnetz beschränkt insbesondere hinsichtlich des Aufbaus von Telekommunikationsverbindungen zwischen Kommunikationspartnern.

Der vorliegenden Erfindung liegt in Anbetracht dieses Standes der Technik die Aufgabe zugrunde, Benutzerschnittstellen mit graphischer Benutzeroberfläche zur Nutzung wenigstens eines Kommunikationsdienstes eines Kommunikationsdienste anbietenden Kommunikationsnetzes und Verfahren zum Betreiben einer Benutzerschnittstelle mit graphischer Benutzeroberfläche seitens eines Rechners der vorgenannten Art hinsichtlich der dem Nutzer einer entsprechenden Benutzerschnittstelle zur Verfügung stehenden Kontroll- und/oder Steuerungsmöglichkeiten zu verbessern, insbesondere hinsichtlich des Aufbaus und/oder der Initiierung des Aufbaus von Telekommunikationsverbindungen zwischen Kommunikationspartnern.

Zur technischen Lösung wird mit der Erfindung ein Verfahren zum Betreiben einer Benutzerschnittstelle mit graphischer Benutzeroberfläche seitens eines Rechners, welcher Mittel zum Zugriff auf ein Kommunikationsdienste anbietendes Kommunikationsnetz aufweist, mit den Merkmalen des Anspruchs 1 vorgeschlagen.

Der Erfindung liegt die Erkenntnis zugrunde, dass durch die erfindungsgemäße Nutzung der wenigstens einen Rufnummerinformation eines Kommunikationspartners in einem Telekommunikationsnetz eine Verbesserung der Kontroll- und/oder Steuerungsmöglichkeiten einer Benutzerschnittstelle mit graphischer Benutzeroberfläche zur Nutzung wenigstens eines Kommunikationsdienstes eines Kommunikationsdienste anbietenden Kommunikationsnetzes erzielbar ist, insbesondere hinsichtlich des Aufbaus und/oder der Initiierung des Aufbaus von Telekommunikationsverbindungen zwischen Kommunikationspartnern. Vorteilhafterweise wird durch einfache Anwahl des die Rufnummerinformation, vorteilhafterweise die sogenannte MSISDN (MSISDN: Mobile Subscriber ISDN; ISDN: Integrated Services Digital Network), aufweisenden Feldes seitens der graphischen Benutzeroberfläche (GUI) der Benutzerschnittstelle automatisch ohne aufwändiges Eingeben der Rufnummerinformation eine entsprechende Telekommunikationsverbindung zu dem Kommunikationspartner dem die entsprechende Rufnummerinformation in dem Telekommunikationsnetz zugeordnet ist aufgebaut beziehungsweise der Aufbau initiiert.

Gemäß einem weiteren vorteilhaften Vorschlag der Erfindung sendet die Benutzerschnittstelle mit der Anwahl des Feldes über das Kommunikationsnetz eine Anforderung nach einer Telekommunikationsverbindung an eine Verbindungsdienste in das Telekommunikationsnetz bereitstellende und/oder vermittelnde Einrichtung seitens des Kommunikationsnetzes, wobei die Anforderung wenigstens die Rufnummerinformation des Kommunikationspartners in dem Telekommunikationsnetz und wenigstens eine Information des die Telekommunikationsverbindung zu dem Kommunikationspartner in dem Telekommunikationsnetz anfordernden Kommunikationspartners aufweist. Eine weitere Ausgestaltung der Erfindung ist dadurch gekennzeichnet, dass die Information des die Telekommunikationsverbindung zu dem Kommunikationspartner in dem Telekommunikationsnetz anfordernden Kommunikationspartners eine Rufnummer, vorzugsweise eine MSISDN, des die Telekommunikationsverbindung zu dem Kommunikationspartner in dem Telekommunikationsnetz anfordernden Kommunikationspartners in einem Telekommunikationsnetz ist oder eine Bestimmung einer Rufnummer, vorzugsweise einer MSISDN, des die Telekommunikationsverbindung zu dem Kommunikationspartner in dem Telekommunikationsnetz anfordernden Kommunikationspartners in einem Telekommunikationsnetz ermöglicht. Vorteilhafterweise erfolgt die Bestimmung der Rufnummer des die Telekommunikationsverbindung zu dem Kommunikationspartner in dem Telekommunikationsnetz anfordernden Kommunikationspartners seitens der Verbindungsdienste in das Telekommunikationsnetz bereitstellenden und/oder vermittelnden Einrichtung.

Gemäß einer weiteren vorteilhaften Ausgestaltung der Erfindung initiiert die Verbindungsdienste in das Telekommunikationsnetz bereitstellende und/oder vermittelnde Einrichtung eine Telekommunikationsverbindung zwischen den in dem jeweiligen Telekommunikationsnetz betreibbaren Endgeräten des Kommunikationspartners in dem Telekommunikationsnetz und dem die Telekommunikationsverbindung zu dem Kommunikationspartner in dem Telekommunikationsnetz anfordernden Kommunikationspartner.

Eine weitere vorteilhafte Ausgestaltung der Erfindung sieht vor, dass die Verbindungsdienste in das Telekommunikationsnetz bereitstellende und/oder vermittelnde Einrichtung über das Telekommunikationsnetz in dem das Endgerät des die Telekommunikationsverbindung zu dem Kommunikationspartner in dem Telekommunikationsnetz anfordernden Kommunikationspartners betreibbar ist eine Nachricht an das Endgerät des die Telekommunikationsverbindung zu dem Kommunikationspartner in dem Telekommunikationsnetz anfordernden Kommunikationspartners sendet, welche seitens des Endgerätes des die Telekommunikationsverbindung zu dem Kommunikationspartner in dem Telekommunikationsnetz anfordernden Kommunikationspartners sendet, welche seitens des Endgerätes des die Telekommunikationsverbindung zu dem Kommunikationspartner in dem Telekommunikationsnetz anfordernden Kommunikationspartners den Aufbau der Telekommunikationsverbindung zu dem Kommunikationspartner in dem Telekommunikationsnetz initiiert. Vorteilhafterweise wird die Nachricht mittels eines Nachrichtendienstes des Telekommunikationsnetzes über das Telekommunikationsnetz gesendet, vorzugsweise mittels eines Kurzmitteilungsdienstes (SMS: Short Message Service) des Telekommunikationsnetzes oder mittels einer WAP-basierten Anwendung (WAP: Wireless Application Protocol).

Gemäß einer weiteren Ausgestaltung der Erfindung wird die Telekommunikationsverbindung und/oder die Nachricht über die Rufnummer des die Telekommunikationsverbindung zu dem Kommunikationspartner in dem Telekommunikationsnetz anfordernden Kommunikationspartners im Telekommunikationsnetz abgerechnet.

Vorteilhafterweise ist die Benutzerschnittstelle ein Browser.

Zur technischen Lösung der eingangs genannten Aufgabe wird mit der vorliegenden Erfindung ferner eine Benutzerschnittstelle mit graphischer Benutzeroberfläche zur Nutzung wenigstens eines Kommunikationsdienstes eines Kommunikationsdienste anbietenden Kommunikationsnetzes, mit den Merkmalen des Anspruchs 8 vorgeschlagen.

Weitere Einzelheiten, Merkmale und Vorteile der Erfindung werden nachfolgend anhand der in den Figuren der Zeichnung dargestellten Ausführungsbeispiele näher erläutert. Dabei zeigen:
- Fig. 1: in einer schematischen Prinzipdarstellung die Einrichtung einer erfindungsgemäßen Benutzerschnittstelle;
- Fig. 2: in einer schematischen Prinzipdarstellung ein Ausführungsbeispiel eines Betriebs einer erfindungsgemäßen Benutzerschnittstelle hinsichtlich der Anforderung einer Telekommunikationsverbindung;
- Fig.3: in einer schematischen Prinzipdarstellung ein Ausführungsbeispiel eines Betriebs einer erfindungsgemäßen Benutzerschnittstelle hinsichtlich der Initiierung des Aufbaus einer Telekommunikationsverbindung;
- Fig.4: in einer schematischen Prinzipdarstellung ein weiteres Ausführungsbeispiel eines Betriebs einer erfindungsgemäßen Benutzerschnittstelle hinsichtlich der Initiierung des Aufbaus einer Telekommunikationsverbindung und
- Fig. 5: in einer schematischen Prinzipdarstellung ein weiteres Ausführungsbeispiel eines Betriebs einer erfindungsgemäßen Benutzerschnittstelle hinsichtlich der Initiierung des Aufbaus einer Telekommunikationsverbindung.

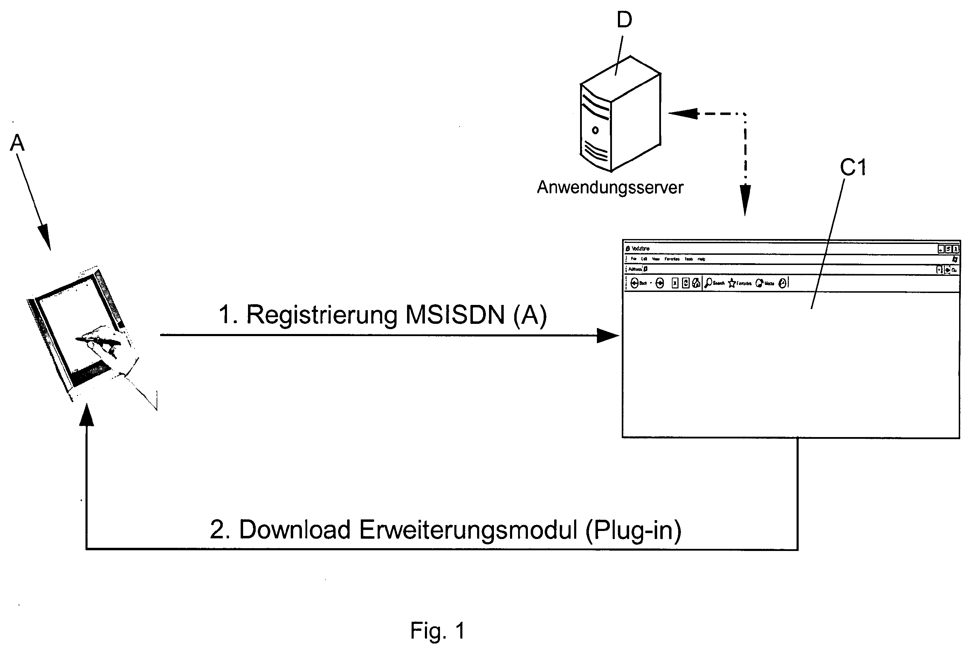

Fig. 1 zeigt die Registrierung eines Nutzers A als Kommunikationspartner zur Nutzung eines Kommunikationsdienstes eines Kommunikationsnetzes mittels einer Benutzerschnittstelle, vorliegend einem sogenannten Browser, mit graphischer Benutzeroberfläche, einer sogenannten GUI (GUI: Graphical User Interface), seitens eines Rechners eines Nutzers A. Der Rechner des Nutzers A weist hier nicht expliziert dargestellte Mittel zum Zugriff auf ein Kommunikationsdienste anbietendes Kommunikationsnetz, vorliegend das Internet, auf. Über eine entsprechende im Internet erreichbare Seite (Website) eines den erfindungsgemäßen Kommunikationsdienst anbietenden Diensteanbieters D gibt der Nutzer A hierzu insbesondere eine Rufnummerinformation, vorliegend die MSISDN und je nach Bedarf weitere Informationen bezüglich der Identität des Nutzers A in einer von dem Browser C1 ablaufenden Anwendung des Diensteanbieters D ein. Im Gegenzug erhält der registrierte Nutzer A über das Internet als Kommunikationsnetz auf seinen Rechner ein Anwendungsprogramm zur Installation desselben seitens des Rechners des sich registrierenden Nutzers A. Das Anwendungsprogramm ist vorliegend ein sogenanntes Plug-In zur Installation seitens der Benutzerschnittstelle (Browser) des Nutzers A. Im Rahmen der Registrierung wird seitens des Anbieters D, vorliegend seitens eines Application Servers D des Diensteanbieters D, des erfindungsgemäßen Kommunikationsdienstes im Rahmen der Registrierung der Nutzer A in einer Datenbank zumindest mit seiner MSISDN erfasst und gespeichert.

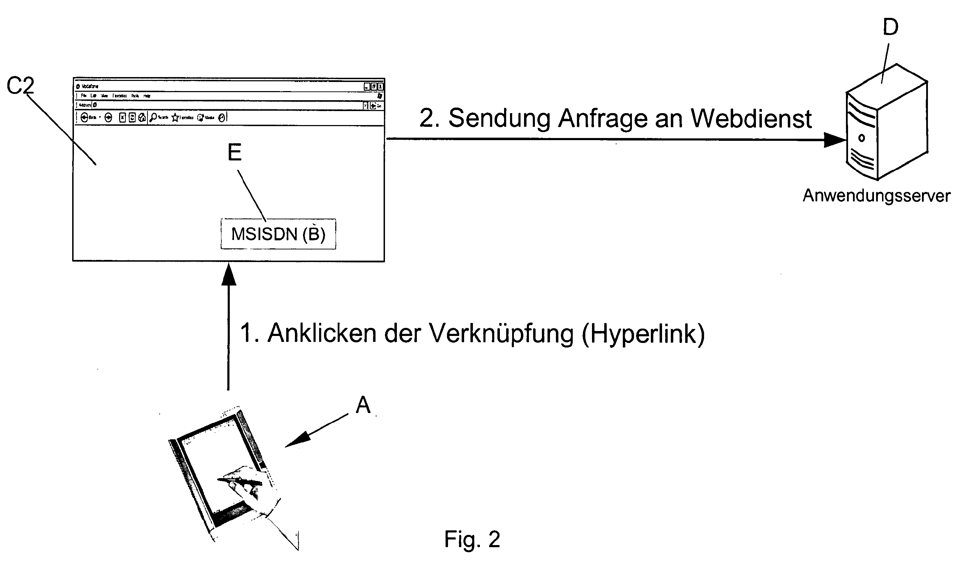

Fig. 2 zeigt den Browser des Nutzers A in einer Nutzung nach der Installation des Plug-Ins. Das entsprechend seitens des Browsers des Nutzers A installierte Plug-In bewirkt, dass eine in einem von der Benutzerschnittstelle (Browser) durch Aufrufen einer Website C2 im Internet erzeugten Feld E der graphischen Benutzeroberfläche (GUI) wiedergegebene MSISDN (MSISDN (B)) eines Kommunikationspartners (Nutzer B) in einem Telekommunikationsnetz bei Anwahl des Feldes E über ein Eingabemittel des Rechners des Nutzer A über das Kommunikationsnetz, vorliegend also das Internet, über die Mittel des Rechners zum Zugriff auf das Internet eine Anforderung nach einer Telekommunikationsverbindung an eine entsprechende von dem Anbieter D eines erfindungsgemäßen Kommunikationsdienstes betriebenen Einrichtung, vorliegend einem sogenannten Application-Server D, gesendet wird. Das seitens des Browsers C2 des Nutzers A wiedergegebene Feld E mit einer MSISDN eines Kommunikationspartners in einem Telekommunikationsnetz, vorliegend der MSISDN des Nutzers B, dient insofern als sogenannter Hyperlink.

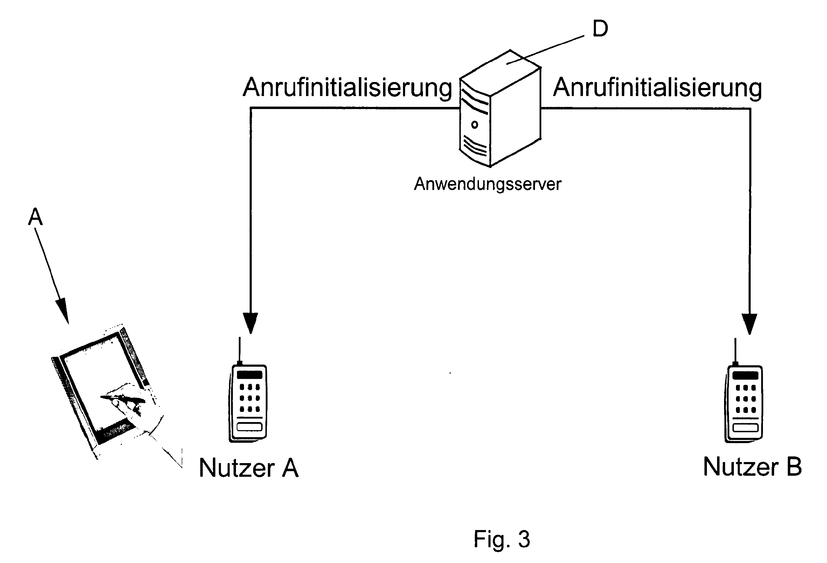

Seitens des Application-Servers D wird aus der mittels des Browsers C2 über das Internet gesendeten Anforderung zunächst eine den Nutzer A identifizierende Kennung (ID) als auch die in dem den Hyperlink E repräsentierenden Feld E wiedergegebene MSISDN des Nutzers B (MSISDN (B)) mit dem eine Telekommunikationsverbindung aufgebaut werden soll extrahiert. Anhand der extrahierten Kennung (ID) des registrierten Nutzers A wird seitens des Application-Servers D aus der Datenbank registrierter Nutzer die MSISDN des Nutzers A (MSISDN (A)) bestimmt. Anschließend initiiert der Application-Server D den Aufbau einer gewünschten Kommunikationsverbindung, wie in Fig. 3, Fig. 4 oder Fig. 5 dargestellt.

Fig. 3 zeigt ein Ausführungsbeispiel der Initiierung einer Telekommunikationsverbindung zwischen dem die Kommunikationsverbindung anfordernden Nutzer A und einem Nutzer B, dessen MSISDN mit dem Hyperlink E seitens einer in dem Browser C2 des Nutzers A wiedergegebenen Website wiedergegeben ist. Bei dem Ausführungsbeispiel gemäß Fig. 3 initiiert dabei der Application-Server D direkt den Aufbau einer Telekommunikationsverbindung zwischen den Telekommunikationsendgeräten, vorliegend Mobilfunktelefonen, des Nutzers A (A-Party) und des Nutzers B (B-Party). Der Application-Server D initiiert dabei mittels des entsprechenden Kommunikationsdienstes einen sogenannten Konferenzanruf (conference call) zwischen den Endgeräten des Nutzers A und des Nutzers B. Die Abrechnung des Anrufs erfolgt dabei so, als wenn der Nutzer A mit seinem Endgerät das Endgerät des Nutzers B direkt angerufen hätte. Die Telekommunikationsverbindung zwischen den Endgeräten des Nutzers A und des Nutzers B erfolgt dabei über das Mobilfunknetz, vorzugsweise einem Mobilfunknetz gemäß einem GSM-, GPRS- und/oder UMTS-Funknetzstandard.

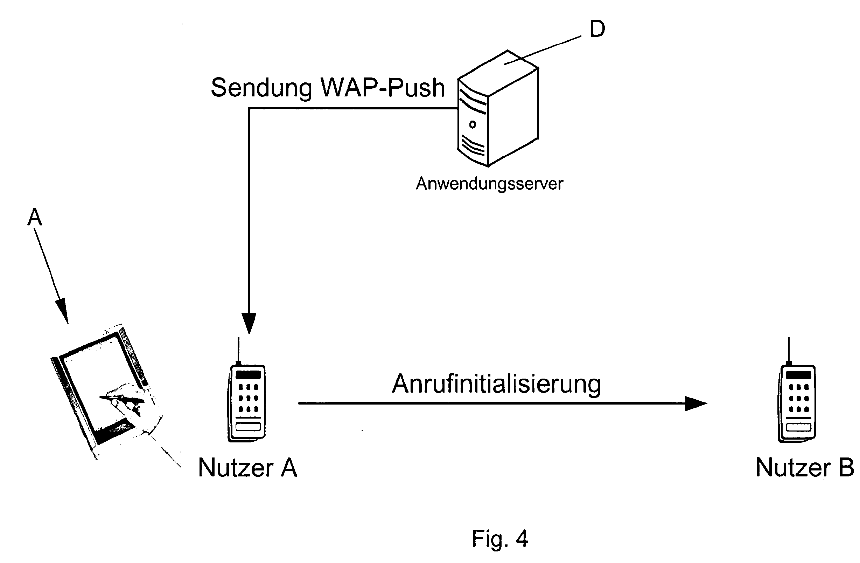

Fig. 4 zeigt ein weiteres Ausführungsbeispiel der Initiierung einer Telekommunikationsverbindung zwischen dem die Kommunikationsverbindung anfordernden Nutzer A und einem Nutzer B, dessen MSISDN mit dem Hyperlink E seitens einer in dem Browser C2 des Nutzers A wiedergegebenen Website wiedergegeben ist. Bei dem Ausführungsbeispiel gemäß Fig. 4 sendet dabei der Application-Server D an das Telekommunikationsendgerät des Nutzers A, vorliegend einem Mobilfunktelefon, eine Nachricht mittels eines WAP-Push-Dienstes. Der seitens des Mobilfunktelefons des Nutzers A (A-Party) empfangene WAP-Push bewirkt, dass das Mobilfunktelefon A automatisch über das Mobilfunknetz eine Telekommunikationsverbindung zu dem Telekommunikationsendgerät des Nutzers B (B-Party) aufbaut.

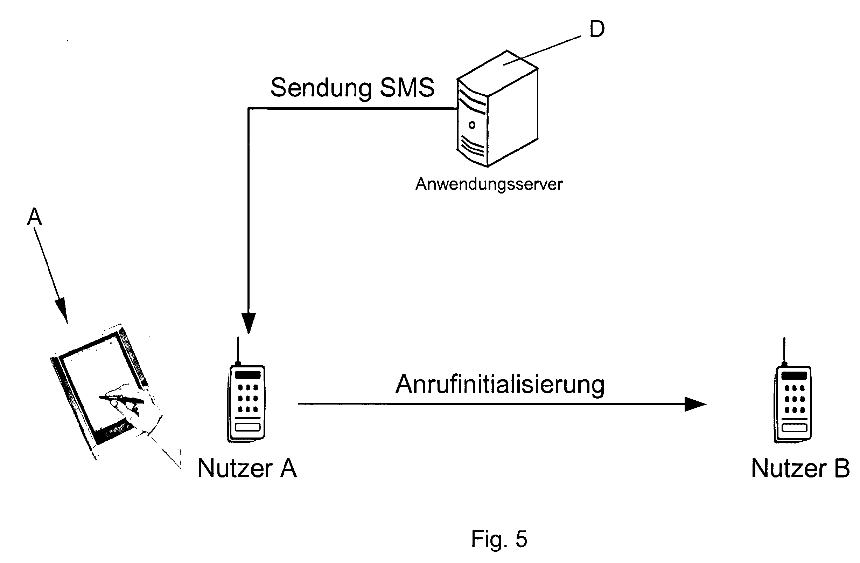

Fig. 5 zeigt ein weiteres Ausführungsbeispiel der Initiierung einer Telekommunikationsverbindung zwischen dem die Kommunikationsverbindung anfordernden Nutzer A und einem Nutzer B, dessen MSISDN mit dem Hyperlink E seitens einer in dem Browser C2 des Nutzers A wiedergegebenen Website wiedergegeben ist. Bei dem Ausführungsbeispiel gemäß Fig. 4 sendet dabei der Application-Server D an das Telekommunikationsendgerät des Nutzers A, vorliegend einem Mobilfunktelefon, eine Nachricht mittels SMS. Die seitens des Mobilfunktelefons des Nutzers A (A-Party) empfangene SMS bewirkt, dass das Mobilfunktelefon A automatisch über das Mobilfunknetz eine Telekommunikationsverbindung zu dem Telekommunikationsendgerät des Nutzers B (B-Party) aufbaut.

Die in den Fig. der Zeichnungen dargestellten Ausführungsbeispiele der Erfindung dienen lediglich der Erläuterung der Erfindung und sind für diese nicht beschränkend.

### Bezugszeichenliste

- A: Nutzer/Endgerät (Nutzer)
- B: Nutzer/Endgerät (Nutzer)
- C1: Benutzerschnittstelle(Browser) mit Website (D)
- C2: Benutzerschnittstelle(Browser) mit Website
- D: Diensteanbieter/Application-Server
- E: Feld/Hyperlink

## Patentansprüche

1. Verfahren zum Betreiben einer Benutzerschnittstelle (C1) mit graphischer Benutzeroberfläche seitens eines Rechners, welcher Mittel zum Zugriff auf ein Kommunikationsdienste anbietendes Kommunikationsnetz aufweist, wobei
die Benutzerschnittstelle (C1)
über eine Kommunikationsverbindung mit dem Kommunikationsnetz eine Nutzung wenigstens eines Kommunikationsdienstes des Kommunikationsnetzes ermöglicht
und
über ein Eingabemittel des Rechners auswählbare Felder (E) erzeugt,
- wobei die Felder (E) zumindest teilweise eine Steuerung des Kommunikationsdienstes des Kommunikationsnetzes ermöglichen
und
- die seitens der graphischen Benutzeroberfläche der Benutzerschnittstelle (C1) wiedergegeben werden,
wobei
seitens eines von der Benutzerschnittstelle (C1) erzeugten Feldes (E) der graphischen Benutzeroberfläche wenigstens eine Rufnummerinformation eines Kommunikationspartners (B) in einem Telekommunikationsnetz wiedergegeben wird
und
bei über ein Eingabemittel des Rechners erfolgender Anwahl des Feldes (E)
über das Kommunikationsnetz
eine Telekommunikationsverbindung zu dem Kommunikationspartner (B) in dem Telekommunikationsnetz
unter Nutzung der Rufnummerinformation des Kommunikationspartners (B) in dem Telekommunikationsnetz aufgebaut wird,
wobei
die Benutzerschnittstelle (C1) mit der Anwahl des Feldes (E) über das Kommunikationsnetz eine Anforderung nach einer Telekommunikationsverbindung an eine Verbindungsdienste in das Telekommunikationsnetz bereitstellende und/oder vermittelnde Einrichtung (D) seitens des Kommunikationsnetzes sendet, wobei die Anforderung wenigstens die Rufnummerinformation des Kommunikationspartners (B) in dem Telekommunikationsnetz und wenigstens eine Information des die Telekommunikationsverbindung zu dem Kommunikationspartner (B) in dem Telekommunikationsnetz anfordernden Kommunikationspartners (A) aufweist,
**dadurch gekennzeichnet, dass**
die Verbindungsdienste in das Telekommunikationsnetz bereitstellende und/oder vermittelnde Einrichtung (D) über das Telekommunikationsnetz in dem das Endgerät (A) des die Telekommunikationsverbindung zu dem Kommunikationspartner (B) in dem Telekommunikationsnetz anfordernden Kommunikationspartners betreibbar ist eine Nachricht an das Endgerät (A) des die Telekommunikationsverbindung zu dem Kommunikationspartner (B) in dem Telekommunikationsnetz anfordernden Kommunikationspartners (A) sendet,
welche seitens des Endgerätes (A) des die Telekommunikationsverbindung zu dem Kommunikationspartner (B) in dem Telekommunikationsnetz anfordernden Kommunikationspartners (A) den Aufbau der Telekommunikationsverbindung zu dem Kommunikationspartner (B) in dem Telekommunikationsnetz initiiert.

2. Verfahren nach Anspruch 1, **dadurch gekennzeichnet, dass** die von der Verbindungsdienste in das Telekommunikationsnetz bereitstellende und/oder vermittelnde Einrichtung (D) an das Endgerät (A), das die Telekommunikationsverbindung zu dem Kommunikationspartner (B) in dem Telekommunikationsnetz anfordernden Kommunikationspartners (A) versendete Nachricht bewirkt, dass das Endgerät (A) des Kommunikationspartners (A) automatisch über das Telekommunikationsnetz eine Telekommunikationsverbindung zu dem Endgerät (B) des Kommunikationspartners (B) aufbaut.

3. Verfahren nach Anspruch 1 oder Anspruch 2, **dadurch gekennzeichnet, dass** die Information des die Telekommunikationsverbindung zu dem Kommunikationspartner (B) in dem Telekommunikationsnetz anfordernden Kommunikationspartners (A) eine Rufnummer des die Telekommunikationsverbindung zu dem Kommunikationspartner (B) in dem Telekommunikationsnetz anfordernden Kommunikationspartners (A) in einem Telekommunikationsnetz ist oder eine Bestimmung einer Rufnummer des die Telekommunikationsverbindung zu dem Kommunikationspartner (B) in dem Telekommunikationsnetz anfordernden Kommunikationspartners (A) in einem Telekommunikationsnetz ermöglicht.

4. Verfahren nach Anspruch 3, **dadurch gekennzeichnet, dass** die Bestimmung der Rufnummer des die Telekommunikationsverbindung zu dem Kommunikationspartner (B) in dem Telekommunikationsnetz anfordernden Kommunikationspartners (A) seitens der Verbindungsdienste in das Telekommunikationsnetz bereitstellenden und/oder vermittelnden Einrichtung (D) erfolgt.

5. Verfahren nach Anspruch einem der Ansprüche 1 bis 4, **dadurch gekennzeichnet, dass** die Nachricht mittels eines Nachrichtendienstes des Telekommunikationsnetzes über das Telekommunikationsnetz gesendet wird, vorzugsweise mittels eines Kurzmitteilungsdienstes des Telekommunikationsnetzes oder mittels einer WAP-basierten Anwendung.

6. Verfahren nach einem der Ansprüche 1 bis 5, **dadurch gekennzeichnet, dass** die Telekommunikationsverbindung und/oder die Nachricht über die Rufnummer des die Telekommunikationsverbindung zu dem Kommunikationspartner (B) in dem Telekommunikationsnetz anfordernden Kommunikationspartners (A) im Telekommunikationsnetz abgerechnet wird.

7. Verfahren nach einem der Ansprüche 1 bis 6, **dadurch gekennzeichnet, dass** die Benutzerschnittstelle ein Browser (C1) ist.

8. Benutzerschnittstelle (C1) mit graphischer Benutzeroberfläche zur Nutzung wenigstens eines Kommunikationsdienstes (D) eines Kommunikationsdienste anbietenden Kommunikationsnetzes,
mit
einer über eine Kommunikationsverbindung mit einem Kommunikationsnetz eine Nutzung wenigstens eines Kommunikationsdienstes des Kommunikationsnetzes ermöglichenden Einrichtung (D),
einer über ein Eingabemittel auswählbare Felder (E) zur Steuerung des Kommunikationsdienstes des Kommunikationsnetzes erzeugenden Einrichtung (D) und
einer Einrichtung (C1) zur Wiedergabe der erzeugten Felder (E) seitens der graphischen Benutzeroberfläche,
**gekennzeichnet durch**
einen Betrieb seitens eines Rechners nach einem Verfahren nach einem der Ansprüche 1 bis 7.

## Claims

1. A method for operating a user interface (C1) having a graphical user surface by means of a computer which comprises means for having access to a communication network offering communication services,
wherein
the user interface (C1)
enables a use of at least one communication service of the communication network via a communication connection to the communication network
and
generates fields (E) which are selectable via an input means of the computer,
- wherein the fields (E) at least partially enable a control of the communication service of the communication network
and
- the fields will be reproduced by the graphical user surface of the user interface (C1),
wherein
at least one call number information of a communication partner (B) in a telecommunication network will be reproduced by a field (E) of the graphical user surface, which field has been generated by the user interface (C1)
and
if the field (E) is called via an input means of the computer,
a telecommunication connection to the communication partner (B) in the telecommunication network will be established via the communication network using the call number information of the communication partner (B) in the telecommunication network,
wherein
the user interface (C1) with the call of the field (E) sends a request for a telecommunication connection via the communication network to a device (D) of the communication network, which device provides and/or offers connection services into the telecommunication network, wherein
the request at least comprises the call number information of the communication partner (B) in the telecommunication network and at least one information item of the communication partner (A) who requests the telecommunication connection to the communication partner (B) in the telecommunication network,
**characterized in that**
the device (D) which provides and/or offers connection services into the telecommunication network sends a message via the telecommunication network, in which the terminal (A) of the communication partner who requests the telecommunication connection to the communication partner (B) in the telecommunication network is operable, to the terminal (A) of the communication partner who requests the telecommunication connection to the communication partner (B) in the telecommunication network,
which message initiates the establishment of the telecommunication connection to the communication partner (B) in the telecommunication network by means of the terminal (A) of the communication partner (A) who requests the telecommunication connection to the communication partner (B) in the telecommunication network.

2. A method according to claim 1, **characterized in that** the message sent by the device (D), which provides and/or offers connection services into the telecommunication network, to the terminal (A) of the communication partner (A) who requests the telecommunication connection to the communication partner (B) in the telecommunication network causes the terminal (A) of the communication partner (A) to automatically establish a telecommunication connection via the telecommunication network to the terminal (B) of the communication partner (B).

3. A method according to claim 1 or claim 2, **characterized in that** the information item of the communication partner (A) who requests the telecommunication connection to the communication partner (B) in the telecommunication network is a call number in a telecommunication network of the communication partner (A) who requests the telecommunication connection to the communication partner (B) in the telecommunication network or enables a determination of a call number in a telecommunication network of the communication partner (A) who requests the telecommunication connection to the communication partner (B) in the telecommunication network.

4. A method according to claim 3, **characterized in that** the determination of the call number of the communication partner (A) who requests the telecommunication connection to the communication partner (B) in the telecommunication network is realized by the device (D) which provides and/or offers connection services into the telecommunication network.

5. A method according to one of the claims 1 to 4, **characterized in that** the message is sent via the telecommunication network by means of a message service of the telecommunication network, preferably by means of a short message service of the telecommunication network or by means of a WAP based application.

6. A method according to one of the claims 1 to 5, **characterized in that** the telecommunication connection and/or the message will be billed in the telecommunication network over the call number of the communication partner (A) who requests the telecommunication connection to the communication partner (B) in the telecommunication network.

7. A method according to one of the claims 1 to 6, **characterized in that** the user interface is a browser (C1).

8. A user interface (C1) having a graphical user surface for the use of at least one communication service (D) of a communication network offering communication services,
comprising
a device (D) which enables a use of at least one communication service of the communication network via a communication connection to the communication network,
a device (D) which generates fields (E), which are selectable via an input means, for controlling the communication service of the communication network and
a device (C1) for the reproduction of the generated fields (E) by means of the graphical user surface,
**characterized by**
an operation by means of a computer according to a method according to one of the claims 1 to 7.

## Revendications

1. Procédé pour faire fonctionner une interface utilisateur (C1) à surface utilisateur graphique par moyen d'un ordinateur qui comprend des moyens pour avoir accès à un réseau de communication offrant des services de communication,
dans lequel
l'interface utilisateur (C1)
permet une utilisation d'au moins un service de communication du réseau de communication via une connexion de communication avec le réseau de communication
et génère des champs (E) sélectionnables via un moyen d'entrée de l'ordinateur,
- les champs (E) permettant au moins partiellement de commander le service de communication du réseau de communication
et
- les champs étant reproduits par la surface utilisateur graphique de l'interface utilisateur (C1),
dans lequel
au moins une information de numéro d'appel d'un partenaire de communication (B) dans un réseau de télécommunication est reproduit par un champ (E) généré par l'interface utilisateur (C1)
et
si le champ (E) est appelé via un moyen d'entrée de l'ordinateur,
une connexion de télécommunication avec le partenaire de communication (B) dans le réseau de télécommunication sera établie via le réseau de communication en utilisant l'information de numéro d'appel du partenaire de communication (B) dans le réseau de télécommunication,
dans lequel
l'interface utilisateur (C1) avec le champ (E) est appelé envoie une demande pour une connexion de télécommunication via le réseau de communication à un dispositif (D) du réseau de communication, le dispositif fournissant et/ou offrant des services de connexion dans le réseau de télécommunication,
la demande au moins comprenant l'information de numéro d'appel du partenaire de communication (B) dans le réseau de télécommunication et au moins une information du partenaire de communication (A) qui demande la connexion de télécommunication avec le partenaire de communication (B) dans le réseau de télécommunication,
**caractérisé en ce que**
le dispositif (D) fournissant et/ou offrant les services de connexion dans le réseau de télécommunication envoie un message via le réseau de télécommunication, dans lequel le terminal (A) du partenaire de communication qui demande la connexion de télécommunication avec le partenaire de communication (B) dans le réseau de télécommunication est fonctionnant, au terminal (A) du partenaire de communication (A) qui demande la connexion de télécommunication avec le partenaire de communication (B) dans le réseau de télécommunication,
lequel message initie l'établissement de la connexion de télécommunication avec le partenaire de communication (B) dans le réseau de télécommunication par moyen du terminal (A) du partenaire de communication (A) qui demande la connexion de télécommunication avec le partenaire de communication (B) dans le réseau de télécommunication.

2. Procédé selon la revendication 1, **caractérisé en ce que** le message envoyé par le dispositif (D) fournissant et/ou offrant les services de connexion dans le réseau de télécommunication au terminal (A) du partenaire de communication qui demande la connexion de télécommunication avec le partenaire de communication (B) dans le réseau de télécommunication provoque que le terminal (A) du partenaire de communication (A) établie automatiquement une connexion de télécommunication via le réseau de télécommunication avec le terminal (B) du partenaire de communication (B).

3. Procédé selon la revendication 1 ou la revendication 2, **caractérisé en ce que** l'information du partenaire de communication (A) qui demande la connexion de télécommunication avec le partenaire de communication (B) dans le réseau de télécommunication est un numéro d'appel dans un réseau de télécommunication du partenaire de communication (A) qui demande la connexion de télécommunication avec le partenaire de communication (B) dans le réseau de télécommunication ou permet une détermination d'un numéro d'appel dans un réseau de télécommunication du partenaire de communication (A) qui demande la connexion de télécommunication avec le partenaire de communication (B) dans le réseau de télécommunication.

4. Procédé selon la revendication 3, **caractérisé en ce que** la détermination du numéro d'appel du partenaire de communication (A) qui demande la connexion de télécommunication avec le partenaire de communication (B) dans le réseau de télécommunication est effectuée par le dispositif (D) fournissant et/ou offrant les services de connexion dans le réseau de télécommunication.

5. Procédé selon l'une des revendications 1 à 4, **caractérisé en ce que** le message est envoyé via le réseau de télécommunication par moyen d'un service de messages du réseau de télécommunication, de préférence par moyen d'un service de messages courts du réseau de télécommunication ou par moyen d'une application basée sur WAP.

6. Procédé selon l'une des revendications 1 à 5, **caractérisé en ce que** la connexion de télécommunication et/ou le message est facturé dans le réseau de télécommunication par le biais du numéro d'appel du partenaire de communication (A) qui demande la connexion de télécommunication avec le partenaire de communication (B) dans le réseau de télécommunication.

7. Procédé selon l'une des revendications 1 à 6, **caractérisé en ce que** l'interface utilisateur est un navigateur (C1).

8. Interface utilisateur (C1) à surface utilisateur graphique destinée à l'utilisation d'au moins un service de communication (D) d'un réseau de communication offrant des services de communication,
comprenant
un dispositif (D) qui permet une utilisation d'au moins un service de communication du réseau de communication via une connexion de communication avec un réseau de communication,
un dispositif (D) qui génère des champs (E) sélectionnables via un moyen d'entrée pour commander le service de communication du réseau de communication et
un dispositif (C1) pour reproduire les champs générés (E) par moyen de la surface utilisateur graphique,
**caractérisé par**
un fonctionnement géré par un ordinateur selon un procédé selon l'une des revendications 1 à 7.
